(19) Europäisches Patentamt / European Patent Office / Office européen des brevets

(11) **EP 4 600 703 A1**

(12) **DEMANDE DE BREVET EUROPEEN**

(43) Date de publication:
**13.08.2025 Bulletin 2025/33**

(21) Numéro de dépôt: **25155501.7**

(22) Date de dépôt: **03.02.2025**

(51) Classification Internationale des Brevets (IPC):
**G01V 3/08** *(2006.01)* **G01V 3/38** *(2006.01)*

(52) Classification Coopérative des Brevets (CPC):
**G01V 3/081; G01V 3/38**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **08.02.2024 FR 2401260**

(71) Demandeur: **SKIPPER NDT**
**64000 Pau (FR)**

(72) Inventeurs:
• **Laichoubi, Mehdi**
**75010 Paris (FR)**

• **Bénet, Vincent**
**13710 Fuveau (FR)**
• **Kella Bennani, Hamza**
**92350 Le Plessis Robinson (FR)**
• **Hu, Miaohang**
**77600 Bussy-Saint-Georges (FR)**
• **Stasse, Florian**
**92190 Meudon (FR)**
• **Takillah, Samir**
**92100 Boulogne Billancourt (FR)**

(74) Mandataire: **RVDB**
**85 Place Marmottan**
**BP 30247**
**62405 Béthune Cedex (FR)**

(54) **PROCÉDÉ DE CARTOGRAPHIE POUR LE CONTRÔLE DÉTAT ET/OU LA GÉOLOCALISATION D'UNE STRUCTURE ENTERRÉE, SEMI-ENTERRÉE OU IMMERGÉE COMPORTANT UN MATÉRIAU MÉTALLIQUE OU MAGNÉTIQUE**

(57) La présente invention concerne un procédé de cartographie pour le contrôle d'état et/ou la géolocalisation d'une structure enterrée, semi-enterrée ou immergée comportant un matériau métallique ou magnétique, dans lequel on réalise : une étape d'acquisition de données magnétiques spatialisées obtenues par des capteurs magnétiques en différents points de mesure de la zone à contrôler, après injection d'un courant sur la structure, une étape de génération d'un segment provisoire, comportant un ensemble de points provisoire, et d'un volume autour de chaque point provisoire, le volume comportant un nuage de points, et une étape de simulation, pour chaque point de chaque volume, permettant de calculer les valeurs magnétiques simulées des points du nuage au niveau de tout ou partie des points de mesure.

[Fig. 1]

EP 4 600 703 A1

**Description**

Domaine technique

La présente invention concerne un procédé de cartographie pour le contrôle d'état et/ou la géolocalisation d'une structure enterrée, semi-enterrée ou immergée comportant un matériau métallique ou magnétique. L'invention trouvera son application dans la localisation de canalisation de type pipeline, notamment pour le transfert de liquide ou de gaz. L'invention pourra également être utilisée pour la détection et la géolocalisation d'autres types d'ouvrage ou encore dans des recherches de type géophysique. Également, l'invention pourra être utilisée dans le contrôle externe d'ouvrages à la fois pour le contrôle de l'intégrité de l'ouvrage et pour évaluer la connexion magnétique entre deux ouvrages voisins.

Arrière-plan technologique

On connaît différents procédés de détection utilisant des magnétomètres pour la détection de structures non visibles ainsi que différents procédés associés.
On connait également des procédés utilisant des technologies variées telles que la radiodétection, le radar, le lidar. A chaque fois dans ces différentes techniques connus on vient réaliser des mesures, notamment par balayage du secteur à contrôler, puis on vient générer, à partir des données collectées combinant les mesures et le positionnement des mesures, une carte de géolocalisation en 2D ou 3D. Pour la génération de ces cartes on ne vérifie pas toujours les anomalies des mesures qui peuvent trouver leurs sources dans diverses causes et notamment la défaillance d'un capteur ou encore des interférences dues à des ouvrages à proximité. De ce fait, ces cartes générées manquent en général de précision et par ailleurs peuvent comporter des aberrations.
La demanderesse a déposé une demande WO2023148057 permettant de surmonter une partie des inconvénients précités. Dans cette demande, on prévoit un procédé générant une carte magnétique interactive à partir des données magnétiques collectées. A partir de cette carte magnétique interactive, un opérateur peut ajouter ou supprimer des données magnétiques pour corriger des anomalies de détection ou pour interpoler des données en fonction de données magnétiques voisines. Dans le procédé décrit dans cette demande, les données et les traitements ou filtrages successifs permettent de donner dans la plupart des cas de bons résultats, toutefois ce procédé nécessite une intervention humaine pour corriger un certain nombre d'anomalies. Cette intervention d'un opérateur nécessite une bonne expérience et est couteuse en temps. De plus ce type de procédé ne permet pas d'invalider automatiquement un tracé ou un positionnement de structure erroné ou incohérent que la source de ces erreurs de tracé provienne des données magnétiques collectés ou encore d'un mauvais choix de modèle. Ce type de procédé ne permet pas non plus de confronter des données réelles à des données provenant de modèles de simulation.

Problème technique à résoudre

Un problème technique que se propose de résoudre la présente invention est de fournir un nouveau procédé de cartographie dans lequel les données magnétiques sont comparées à des données simulées permettant d'améliorer la précision de la localisation de la structure.
Un autre problème que se propose de résoudre la présente invention est de proposer un procédé permettant de vérifier et/ou corriger les résultats obtenus à partir de la simulation et des données collectées sans intervention humaine.
Un autre problème que se propose de résoudre la présente invention est d'empêcher la génération de la carte de géolocalisation en cas d'incohérence ou d'aberration.
Un autre problème que se propose de résoudre la présente invention est, de proposer un procédé simple à mettre en œuvre et permettant de tester plusieurs hypothèses jusqu'à l'obtention d'une carte de géolocalisation cohérente.

Résumé de l'invention

La présente invention concerne un procédé de cartographie pour le contrôle d'état et/ou la géolocalisation d'une structure enterrée, semi-enterrée ou immergée comportant un matériau métallique ou magnétique, ce procédé comprend les étapes décrites ci-dessous.
Le procédé de cartographie comprend une étape d'acquisition de données magnétiques spatialisées obtenues par des capteurs magnétiques en différents points de mesure de la zone à contrôler, après injection d'un courant sur la structure.
Le procédé comprend en outre une étape de génération d'un segment provisoire, comportant un ensemble de points provisoire (Pi), et d'un volume (Vi) autour de chaque point provisoire (Pi), le volume (Vi) comportant un nuage de points.

Le procédé comprend en outre une étape de simulation, pour chaque point de chaque volume (Vi), permettant de calculer les valeurs magnétiques simulées (VMS) des points du nuage au niveau de tout ou partie des points de mesure (Pm).

Le procédé comprend en outre une étape de comparaison entre les valeurs magnétiques simulées (VMS) des points de nuage de chaque volume (Vi) et les valeurs magnétiques (VM) spatialisées pour attribuer un score à chaque point de nuage de chaque volume (Vi),

Le procédé comprend en outre une étape de sélection, pour chaque volume (Vi), d'un point du nuage présentant le meilleur score, l'ensemble des points sélectionnés (Si) remplaçant l'ensemble des points provisoires (Pi) du segment provisoire.

Le procédé comprend en outre une étape de création d'une carte magnétique reprenant l'ensemble des points sélectionnés (Si).

Définitions

Selon la présente invention, l'expression matériau magnétique ou métallique, dans cette demande, fait référence à tout type de matériau conducteur générant un champ magnétique après injection d'un courant, et notamment englobe les matériaux de type ferromagnétiques.

Selon la présente invention, l'expression nuage de points, dans cette demande, fait référence à un ensemble non limités de points distribués de manière ordonnée ou aléatoire dans un volume.

Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :

[Fig. 1] illustre schématiquement une partie des étapes du procédé selon l'invention,
[Fig. 2] illustre schématiquement un exemple de tracé généré par la mise en œuvre du procédé selon l'invention,
[Fig. 3] représente un exemple de carte obtenue par la mise en œuvre du procédé selon l'invention,
[Fig. 4] représente un exemple de réalisation du procédé sous forme de diagramme reprenant les différentes étapes du procédé selon l'invention.

Description détaillée

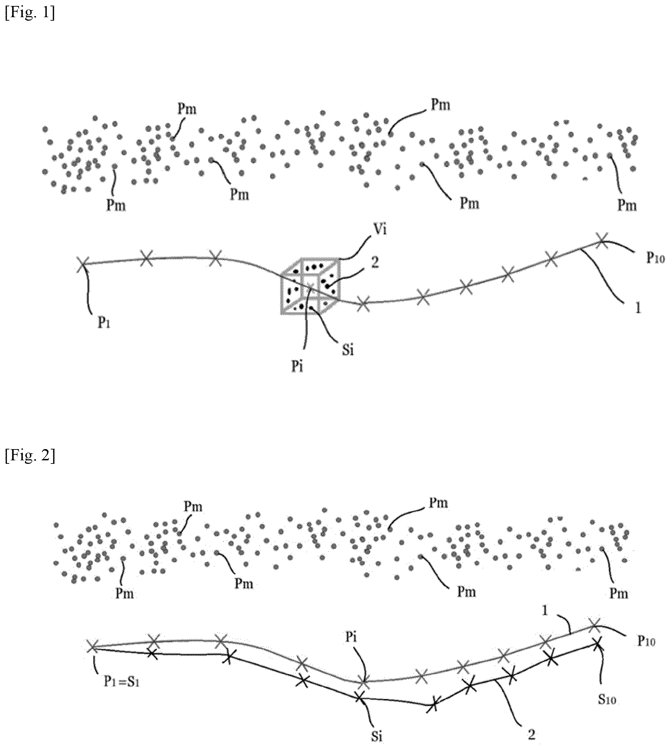

La figure 1 illustre de manière générale différentes étapes du procédé. Plus précisément le procédé comprend une étape d'acquisition de données magnétiques spatialisées obtenues par des capteurs magnétiques en différents points de mesure de la zone à contrôler, après injection d'un courant sur la structure. Ces points de mesure sont représentés de manière schématique par l'ensemble des points Pm en partie haute de la figure 1.

L'exemple des figures 1 et 2 est un exemple simplifié, il comprend donc un nombre limité de points de mesure Pm à des altitudes moyennes, cela étant le principe de la mesure et les étapes de procédé sont identiques pour le traitement d'un cas réel même si le nombre de mesures est plus important.

La mesure magnétique des points de mesure est avantageusement réalisée par des magnétomètres notamment placés sur un dispositif mobile tel qu'un véhicule ou un aéronef et notamment par un drone équipé de rampes de magnétomètres. Le dispositif mobile se déplace à l'aplomb de la zone à contrôler avantageusement selon des bandes sensiblement parallèles au positionnement supposé de la structure enterrée ou encore selon un quadrillage.

Lorsque les points de mesure Pm ont été obtenus, les données magnétiques peuvent être traitées pour pouvoir être comparées dans la suite des étapes du procédé.

Selon un premier exemple, pour pouvoir collecter les données magnétiques, on réalise une étape d'injection d'un courant dans la structure et une étape de traitement du signal, de la composante électrique du signal émis par la structure en réponse à l'injection du signal permettant la comparaison avec les valeurs magnétiques simulées.

Selon un second exemple avantageux, cette étape d'acquisition des données magnétiques spatialisées comprend une étape d'injection d'un courant alternatif dans la structure et une étape de traitement des mesures magnétiques via un filtrage passe-bande et un filtre de Hilbert.

Le procédé comprend ensuite une étape de génération d'un segment provisoire, comportant un ensemble de points provisoires Pi. Dans l'exemple simplifié, le segment provisoire 1 comprend dix points provisoires P1 à P10.

Le positionnement de ses points P1 à P10 peut être effectué selon plusieurs options en fonction du cas réel à traiter. Selon un premier mode de réalisation on peut se baser sur des données du terrain notamment si un ou plusieurs points de positionnement de la structure sont connus. On peut également positionner ce segment provisoire 1 à partir de données cartographiques existantes même si ces dernières sont perfectibles ou même peu précises. En cas d'absence de données il est également possible de placer les points en fonction d'hypothèses sur la localisation de la structure enterrée ou encore d'hypothèses sur sa forme générale.

La distance entre les points provisoire Pi peut également varier, notamment en fonction de la précision requise pour la géolocalisation. De manière avantageuse, la longueur d'un sous segment entre deux points provisoires successifs est comprise entre 5 et 15 % de la longueur attendue de la dimension la plus petite de la structure.

Dans cette étape de génération du segment provisoire 1, on prévoit également la génération d'un volume Vi autour de chaque point provisoire Pi.

Dans l'exemple des figures 1 et 2 on a représenté un seul volume Vi comportant un nuage de points. Ce volume Vi est disposé autour du point provisoire P4. Cela étant, le procédé génère un volume Vi autour de chaque point provisoire Pi pour permettre les étapes de comparaison décrites ci-après.

Dans l'exemple des figures 1 et 2 ce volume Vi autour d'un point Pi est un cube, centré sur Pi, dont la longueur d'arête correspond à la longueur du sous segment entre deux points Pi successifs. L'ensemble des volumes Vi forme ainsi un volume intégrant l'ensemble du segment provisoire 1. Toutefois dans d'autres modes de réalisation on peut prévoir des volumes présentant des géométries différentes et par exemple des sphères autour des points Pi. Également dans d'autres modes de réalisation on peut prévoir que les volumes successifs se chevauchent ou au contraire ne soient pas en contact.

En se reportant à la figure 1, on voit représenté un exemple simplifié de distribution du nuage de points dans un volume Vi. Selon un mode avantageux les points de nuage sont repartis de manière homogène dans le volume Vi. Toutefois d'autres modes de distribution sont également envisageables comme une distribution aléatoire de points dans le volume ou encore des concentrations ou densités de points croissante ou décroissante autour du point Pi provisoire. Selon un autre mode de réalisation on prévoit également que des points supplémentaires de nuage d'un volume Vi sont créés successivement pendant l'étape de simulation et positionnés dans le volume Vi en fonction des scores des points de nuage simulés dans l'étape de simulation. Selon l'invention, le procédé consiste en outre à réaliser une étape de simulation, pour chaque point de chaque volume Vi, permettant de calculer les valeurs magnétiques simulées (VMS) des points du nuage au niveau de tout ou partie des points de mesure.

Dans l'exemple des figures 1 et 2, on vient simuler avantageusement la valeur magnétique de chaque point de nuage de chaque volume Vi au niveau de l'ensemble des points de mesure Pm. Toutefois cette simulation requiert un volume de calcul très important lorsque les points de nuage d'une part et les points de mesure d'autre part sont nombreux. Pour limiter le besoin de calcul, on peut également simuler la valeur magnétique de chaque point de nuage sur une partie seule des points de mesure Pm.

A titre d'exemple on pourra par exemple simuler la valeur magnétique (VMS) d'un point de nuage uniquement sur les points de mesure situés à une distance inférieure à une valeur D dudit point. Cette limitation permet de diminuer les besoins en calcul tout en gardant les valeurs magnétiques simulés sur les points de mesure Pm les plus significatifs pour le point de nuage considéré.

A titre d'exemple également on prévoit que l'étape de simulation, pour chaque point de chaque volume (Vi), permet de calculer les valeurs magnétiques simulées (VMS) des points du nuage au niveau d'un nombre N de points de mesure parmi l'ensemble des points de mesure et correspondant aux N points de mesure les plus proches du point Pi du volume (Vi) considéré. La simulation de la valeur magnétique d'un point du volume sur tout ou partie des points de mesure Pm est obtenue en appliquant la formule de Biot et Savart définissant le vecteur champ magnétique en fonction de l'ensemble des fonctions infinitésimales des sections des pipelines. La formule suivante est appliquée pour la simulation des valeurs magnétiques simulées avec les variables reprises dans le tableau ci-dessous :

[Formule 1]

$$\vec{B}(\vec{r}) = \frac{\mu_0}{4\pi} \oint_C \frac{\vec{I} * \vec{dl} \wedge (\vec{r} - \vec{r'})}{|\vec{r} - \vec{r'}|^3}$$

[Table 1]

| Variable | Signification |
|---|---|
| $\vec{B}(\vec{r})$ | Le champ magnétique au point considéré de coordonnées x, y, z. |
| $\dfrac{\mu_0}{4\pi}$ | Une constante propre au milieu considéré homogène. (Perméabilité magnétique du vide). |
| $\vec{I}$ | Le sens du courant continu dans la section du pipeline infinitésimale. |

(suite)

| Variable | Signification |
|---|---|
| dl | Génératrice de la section considérée comportant une longueur de section est un vecteur unitaire en trois dimensions. |
| $\vec{r}$ | Vecteur définissant la distance orientée entre l'origine du repère considéré et le point de mesure. |
| $\vec{r'}$ | Vecteur définissant la distance orientée entre l'origine du repère considéré et le centre de la section infinitésimale de la section. |
| $\oint_C$ | Intégrale linéique. |

Cette formule est ensuite adaptée à une simulation informatique dans laquelle on considère les sections infinitésimales de pipelines comme des portions de faibles distances. Pour chaque section on obtient la formule suivante :

[Formule 2]

$$d\vec{B}(\vec{r}) = \frac{\mu_0}{4\pi} * \frac{\vec{I} * d\vec{l} \wedge (\vec{r} - \vec{r'})}{|\vec{r} - \vec{r'}|^3}$$

avec $\vec{B}(\vec{r}) = \oint_C d\vec{B}(\vec{r})$

Cette seconde formule permet de créer une fonction permettant de simuler les valeurs magnétiques aux points de mesures (VMS) en fonction d'une configuration de sections pour les points de nuage.

Lorsque l'étape de simulation est terminée avec le calcul des valeurs magnétiques simulées (VMS), le procédé consiste en outre à effectuer une étape de comparaison entre les valeurs magnétiques simulées (VMS) des points de nuage de chaque volume Vi et les données magnétiques spatialisées pour attribuer un score à chaque point de nuage de chaque volume Vi. De manière avantageuse, le score attribué à un point d'un nuage de points est fonction de la comparaison entre les valeurs magnétiques simulées (VMS) de ce point au niveau des points de mesure Pm et les valeur mesurées (VM) au niveau de ces points de mesure Pm, c'est-à-dire les valeurs mesures (VM) obtenues par les magnétomètres, éventuellement corrigées ou traitées pour pouvoir être comparées aux valeurs magnétiques simulées (VMS).

D'une manière générale on va attribuer le meilleur score au point du nuage dont les VMS sont les plus proches des VM des points de mesure.

A ce niveau différents types d'algorithme de score peuvent être envisagés et notamment des algorithmes utilisant différentes méthodes de convergence telles que les méthodes reprises dans le tableau ci-après :

[Table 2]

| Méthode | Explication |
|---|---|
| Nelder-Mead | La méthode de Nelder-Mead est une méthode numérique optimisé pour la minimisation de problèmes non-linéaires où la dérivée est inconnue. C'est un heuristique de méthode de recherche pouvant converger vers des points non-stationnaires. |
| Powell | La méthode Powell est une méthode itérative de minimisation pour les problèmes à scores à moindres carrés. Cette méthode utilise le gradient descendant afin de rechercher les jeux de paramètres. |
| CG | La méthode du gradient conjugué permet de trouver le minimum local le plus proche de la minimisation en effectuant une descente de gradients multi-dimensionnel. |
| BFGS | La méthode de Broyden-Fletcher-Goldfarb-Shanno est une méthode de minimisation non-linéaire sans contraintes. Cette méthode repose sur l'analyse de gradients successifs sans construction de matrice hessiennes. Cette méthode suppose une solution à l'optimum étant quadratique autour de l'optimum. |
| L-BFGS-B | Cette méthode basée sur BFGS permet d'ajouter une limitation de la taille de la mémoire ainsi que des contraintes sur les paramètres de minimisation afin de guider la descente de gradient et éviter la divergence de la solution. |

(suite)

| Méthode | Explication |
|---------|-------------|
| SLSQP | La méthode d'optimisation séquentielle programmée à moindre carré basé sur SQP, est une méthode pour les problèmes quasi-newtoniens afin de modéliser le problème de paramètres locaux comme un hyperplan quadratique pour y trouver le minimum global. |

Bien entendu d'autres méthodes de convergence peuvent également être envisagées pour le calcul du score, en fonction de l'application, l'une des méthodes de minimisation sera sélectionnée et associée à une fonction de calcul de score.

Le calcul de score pourra être selon un premier exemple de réalisation basé sur les erreurs aux points de mesures entre la mesure réelle VM et la valeur simulée VMS. Parmi les différentes fonctions permettant ce calcul de score on pourra utiliser une fonction dans la liste non limitative des fonctions suivantes : f (somme des erreurs au carré entre la VMS et la VM), f (moyenne des erreurs au carré entre la VMS et la VM), f (médiane des erreurs au carré entre la VMS et la VM), f (percentile 90 des erreurs au carré entre la VMS et la VM), f (maximum erreurs au carré entre la VMS et la VM).

Le calcul de score pourra également être, selon un second exemple de réalisation, basé sur la variation aux points de mesures entre la mesure réelle et la valeur simulée. Parmi les différentes fonctions permettant ce calcul de score on pourra utiliser une fonction dans la liste non limitative des fonctions suivantes reprises dans le tableau ci-après avec leur description.

[Table 3]

| Fonction | Description |
|----------|-------------|
| Log_pearson | $\log(2 - \text{pearson}(\text{mag}_{measure}, \text{mag}_{synthetic}))$ Cette équation permet d'avoir un minimum lorsque la corrélation est maximale |
| Sum_square_diff_normalize | $\Sigma(\text{mag}_{measure} - \text{normalize}(\text{mag}_{synthetic}))^2$ Cette équation regarde l'erreur au carré normalisé, afin de retirer le problème d'initialisation en C. |
| Log_spearman | $\log(2 - \text{spearman}(\text{mag}_{measure}, \text{mag}_{synthetic}))$ Cette équation permet d'avoir un minimum lorsque la corrélation est maximale |
| Variance | $\text{var}(\text{mag}_{measure} - \text{mag}_{synthetic}^2)$ Minimisation de la variance |
| STD | $\text{std}(\text{mag}_{measure} - \text{mag}_{synthetic}^2)$ Minimisation de l'écart type |

Le choix de la méthode de minimisation et du calcul du score permet à l'opérateur de mettre en avant différents paramètres tels que la vitesse de convergence vers le point du nuage à sélectionner, la convergence vers un optimum global, ou encore la précision de la convergence lors de l'arrêt de la convergence.

Lorsque l'étape de comparaison est terminée avec le calcul des scores des points du nuage, le procédé consiste en outre à effectuer une étape de sélection, pour chaque volume Vi, d'un point du nuage présentant le meilleur score, l'ensemble des points sélectionnés Si remplaçant l'ensemble des points provisoires Pi du segment provisoire 1.

En se reportant à la figure 2, on voit représenté le segment définitif référencé 2. Par rapport au segment provisoire seul le point P1 est conservé, le segment définitif 2 étant disposé légèrement en dessous du segment provisoire.

Selon un mode de réalisation avantageux de l'invention, l'étape de sélection consiste à conserver le point du nuage présentant le meilleur score et à empêcher la génération de la carte magnétique si un point sélectionné Si d'au moins un des sous segments présente un score insuffisant par rapport à une valeur de score prédéterminée.

Cette caractéristique est particulièrement importante puisqu'elle permet d'empêcher la génération de cartes de géolocalisation présentant des aberrations ou des anomalies.

Selon cette caractéristique si le score est insuffisant ce qui correspond à une trop grande divergence entre les valeurs magnétiques simulées (VMS) et les valeurs mesurées (VM), différentes possibilités sont envisageables. Selon une première option le procédé génère un message d'erreur à destination de l'opérateur. L'opérateur peut ensuite analyser les raisons de l'échec de la génération de la carte et relancer le procédé.

Selon une seconde option, si un point sélectionné Si présente un score insuffisant, le procédé reprend à la première étape de génération d'un segment avec d'autres hypothèses et notamment un nouveau jeu de données magnétiques, ou un autre modèle de simulation numérique ou un autre scénario de structure enterrée, ou un autre positionnement initial de segment provisoire.

Cette procédure peut avantageusement être relancée jusqu'à ce qu'une hypothèse permette d'obtenir des points Si présentant des scores suffisants.

Bien entendu, dans le procédé selon l'invention, il n'est pas nécessaire de passer par des étapes d'affichage des positions des points de mesure Pm, du segment provisoire 1 ou même du segment définitif 2. Ces étapes d'affichage peuvent toutefois être prévues en variante de réalisation pour améliorer la compréhension des résultats pour l'opérateur.

Le procédé selon l'invention permet de déterminer par le calcul et la simulation les points sélectionnés Si. Cette détermination des points Si va permettre de réaliser l'étape de création d'une carte magnétique reprenant l'ensemble des points sélectionnés Si.

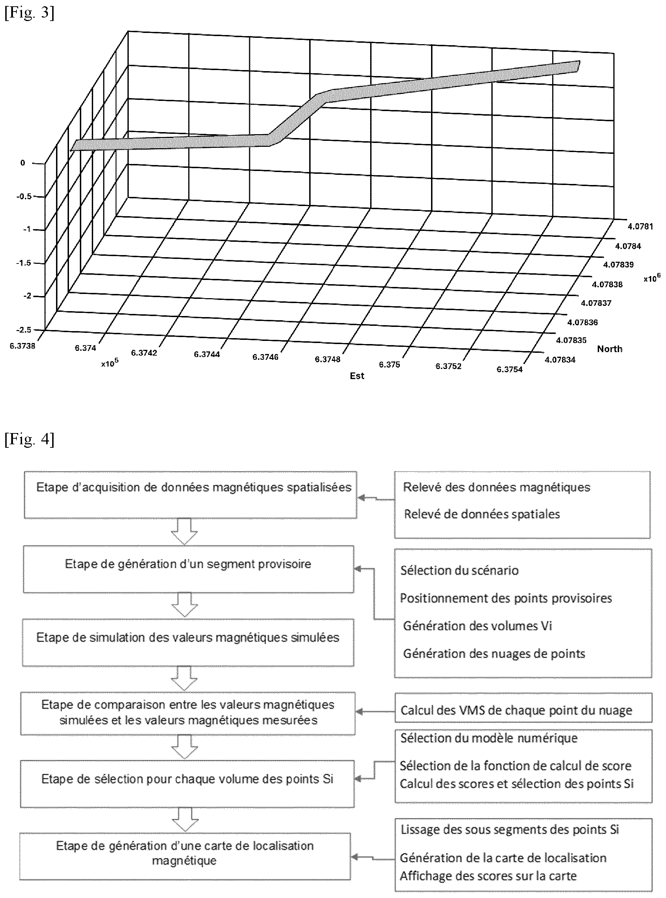

En se reportant à la figure 3 on voit ainsi représenté un exemple de carte magnétique 4 selon l'invention.

Dans l'exemple de la figure 3, on voit que le segment correspondant à la structure présente des angles adoucis. Selon une caractéristique avantageuse de l'invention, on prévoit, lors de l'étape de création de la carte magnétique 4, une étape de lissage permettant limiter les angles entre deux sous segments successifs. Cette étape permet d'affiner la forme générale du segment définitif pour le rendre compatible avec la forme générale attendue de la structure à géolocaliser.

Selon un mode de réalisation avantageux, l'étape de création magnétique permet un affichage de zones de précision variable en fonction des scores de chaque sous-segment et/ou du score de segment définitif 2. Ces différentes zones permettront à un opérateur de visualiser rapidement les zones en fonction de la précision estimée de la localisation. Dans l'exemple de la figure 3 les niveaux de gris permettent de repérer la précision d'une zone par rapport à une autre. Toutefois dans d'autres modes de réalisation les précisions des zones pourront être indiquées autrement et par exemple par un code couleurs ou encore des valeurs numériques.

En se reportant cette fois à la figure 4, on voit représenté un exemple de réalisation du procédé sous forme de diagramme. Les différentes étapes du procédé de cartographie sont résumées sous forme d'un diagramme permettant de comprendre le fonctionnement et les avantages de l'invention notamment par rapport à l'état de la technique.

Bien entendu, d'autres caractéristiques à la portée de l'homme du métier auraient également pu être envisagées sans pour autant sortir du cadre de l'invention tel que défini dans les revendications suivantes.

## Revendications

1. Procédé de cartographie pour le contrôle d'état et/ou la géolocalisation d'une structure enterrée, semi-enterrée ou immergée comportant un matériau métallique ou magnétique, **caractérisé en ce qu'**il comprend :

   - une étape d'acquisition de données magnétiques spatialisées obtenues par des capteurs magnétiques en différents points de mesure de la zone à contrôler, après injection d'un courant sur la structure,
   - une étape de génération d'un segment provisoire, comportant un ensemble de points provisoire (Pi), et d'un volume (Vi) autour de chaque point provisoire (Pi), le volume (Vi) comportant un nuage de points,
   - une étape de simulation, pour chaque point de chaque volume (Vi), permettant de calculer les valeurs magnétiques simulées (VMS) des points du nuage au niveau de tout ou partie des points de mesure (Pm),
   - une étape de comparaison entre les valeurs magnétiques simulées (VMS) des points de nuage de chaque volume (Vi) et les valeurs magnétiques (VM) des données magnétiques spatialisées pour attribuer un score à chaque point de nuage de chaque volume (Vi),
   - une étape de sélection, pour chaque volume (Vi), d'un point du nuage présentant le meilleur score, l'ensemble des points sélectionnés (Si) remplaçant l'ensemble des points provisoires (Pi) du segment provisoire,
   - une étape de création d'une carte magnétique reprenant l'ensemble des points sélectionnés (Si).

2. Procédé de cartographie selon la revendication 1 dans lequel le volume (Vi) autour d'un point provisoire (Pi) est un cube, centré sur (Pi), dont la longueur d'arête correspond à la longueur du sous segment entre deux points provisoires (Pi) successifs.

3. Procédé de cartographie selon l'une quelconque des revendications précédentes dans lequel les points de nuage sont repartis de manière homogène dans le volume (Vi)

4. Procédé de cartographie selon l'une quelconque des revendications précédentes dans lequel la valeur magnétique simulée (VMS) d'un point de nuage en un point de mesure est obtenue par l'application de la formule suivante :

$$d\vec{B}(\vec{r}) = \frac{\mu_0}{4\pi} * \frac{\vec{I} * d\vec{l} \wedge (\vec{r} - \vec{r'})}{\left|\vec{r} - \vec{r'}\right|^3}$$

avec $\vec{B}(\vec{r}) = \oint_C d\vec{B}(\vec{r})$

**5.** Procédé de cartographie selon l'une quelconque des revendications précédentes dans lequel le score attribué à un point d'un nuage de points est fonction de la comparaison entre les valeurs magnétiques simulées (VMS) de ce point au niveau des points de mesure et les valeur mesurées (VM) au niveau de ces points de mesure (PM).

**6.** Procédé de cartographie selon la revendication 5 dans lequel le calcul du score d'un point de nuage est basé sur les erreurs aux points de mesures entre la valeur magnétique mesurée (VM) et la valeur magnétique simulée (VMS).

**7.** Procédé de cartographie selon la revendication 5 dans lequel le calcul du score d'un point de nuage est basé sur la variation aux points de mesures entre la valeur magnétique mesurée (VM) et la valeur magnétique simulée (VMS).

**8.** Procédé de cartographie selon l'une quelconque des revendications précédentes dans lequel l'étape de simulation, pour chaque point de chaque volume (Vi), permet de calculer les valeurs magnétiques simulées (VMS) des points du nuage au niveau d'un nombre N de points de mesure parmi l'ensemble des points de mesure et correspondant aux N points de mesure les plus proches du point Pi du volume (Vi) considéré.

**9.** Procédé de cartographie selon l'une quelconque des revendications précédentes dans lequel des points supplémentaires de nuage d'un volume (Vi) sont créés successivement pendant l'étape de simulation et positionnés dans le volume (Vi) en fonction des scores des points de nuage simulés dans l'étape de simulation.

**10.** Procédé de cartographie selon l'une quelconque des revendications précédentes dans lequel l'étape de sélection consiste à conserver le point du nuage présentant le meilleur score et à empêcher la génération de la carte magnétique si un point sélectionné (Si) d'au moins un des sous segments présente un score insuffisant par rapport à une valeur de score prédéterminée.

**11.** Procédé de cartographie selon l'une quelconque des revendications précédentes dans lequel si un point sélectionné (Si) présente un score insuffisant, le procédé reprend à la première étape de génération d'un segment avec un nouveau jeu de données magnétiques, ou un autre modèle de simulation numérique, un autre scénario de structure enterrée, ou un autre positionnement initial de segment provisoire.

**12.** Procédé de cartographie selon l'une quelconque des revendications précédentes dans lequel l'étape de création magnétique permet un affichage de zones de précision variable en fonction des scores de chaque sous-segment définitif (2) et/ou du score du segment définitif (2).

**13.** Procédé de cartographie selon l'une quelconque des revendications précédentes dans lequel on prévoit que ladite étape de création comporte une étape de lissage permettant limiter les angles entre deux sous segments définitifs (2) successifs

**14.** Procédé de cartographie selon l'une quelconque des revendications précédentes dans lequel l'étape d'acquisition des données magnétiques spatialisées comprend :

- une étape d'injection d'un courant dans la structure,
- une étape de traitement du signal, de la composante électrique du signal émis par la structure en réponse à l'injection du signal permettant la comparaison avec les valeurs magnétiques simulées.

**15.** Procédé de cartographie selon l'une quelconque des revendications précédentes dans lequel l'étape d'acquisition des données magnétiques spatialisées comprend :

- une étape d'injection d'un courant alternatif dans la structure,
- une étape de traitement des mesures magnétiques via un filtrage passe-bande et un filtre de Hilbert.

[Fig. 1]

[Fig. 2]

[Fig. 3]

[Fig. 4]

| Etape d'acquisition de données magnétiques spatialisées | Relevé des données magnétiques |
| --- | --- |
| | Relevé de données spatiales |

| Etape de génération d'un segment provisoire | Sélection du scénario |
| --- | --- |
| | Positionnement des points provisoires |
| Etape de simulation des valeurs magnétiques simulées | Génération des volumes Vi |
| | Génération des nuages de points |

| Etape de comparaison entre les valeurs magnétiques simulées et les valeurs magnétiques mesurées | Calcul des VMS de chaque point du nuage |
| --- | --- |
| | Sélection du modèle numérique |
| Etape de sélection pour chaque volume des points Si | Sélection de la fonction de calcul de score |
| | Calcul des scores et sélection des points Si |

| Etape de génération d'une carte de localisation magnétique | Lissage des sous segments des points Si |
| --- | --- |
| | Génération de la carte de localisation |
| | Affichage des scores sur la carte |

Europäisches
Patentamt

European
Patent Office

Office européen
des brevets

**RAPPORT DE RECHERCHE EUROPEENNE**

Numéro de la demande

EP 25 15 5501

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/197891 A1 (JESSOP MICHAEL L [US] ET AL) 1 août 2013 (2013-08-01) | 1-3,5-8, 10-15 | INV. G01V3/08 |
| A | * alinéas [0046], [0069], [0173] - [0193]; figures 2, 15 * | 4,9 | G01V3/38 |
| | ----- | | |
| A | WO 2021/255082 A1 (CEREMA [FR]) 23 décembre 2021 (2021-12-23) * alinéas [0001], [0028], [0045]; figures 1, 2 * | 1-15 | |
| | ----- | | |
| A | DE 10 2021 113869 B3 (FISCHER ANDREAS [DE]) 21 juillet 2022 (2022-07-21) * alinéas [0001], [0018] - [0024]; figures 1-3 * | 1-15 | |
| | ----- | | |

| DOMAINES TECHNIQUES RECHERCHES (IPC) |
|---|
| G01V |

Le présent rapport a été établi pour toutes les revendications

| Lieu de la recherche | Date d'achèvement de la recherche | Examinateur |
|---|---|---|
| La Haye | 10 avril 2025 | Vollmer, Thorsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 15 5501

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2025

| Document brevet cité au rapport de recherche | Date de publication | Membre(s) de la famille de brevet(s) | | Date de publication |
|---|---|---|---|---|
| US 2013197891 A1 | 01-08-2013 | US | 2013197891 A1 | 01-08-2013 |
|  |  | WO | 2013116328 A1 | 08-08-2013 |
| WO 2021255082 A1 | 23-12-2021 | EP | 4165391 A1 | 19-04-2023 |
|  |  | FR | 3111426 A1 | 17-12-2021 |
|  |  | WO | 2021255082 A1 | 23-12-2021 |
| DE 102021113869 B3 | 21-07-2022 | DE | 102021113869 B3 | 21-07-2022 |
|  |  | EP | 4348311 A1 | 10-04-2024 |
|  |  | WO | 2022247992 A1 | 01-12-2022 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2023148057 A